## Europäisches Patentamt

## European Patent Office

## Office européen des brevets

(19)

(11) Veröffentlichungsnummer: **0 019 259**
**B1**

(12) **EUROPÄISCHE PATENTSCHRIFT**

(45) Veröffentlichungstag der Patentschrift:
**30.11.83**

(51) Int. Cl.³: **H 02 K 9/20**, H 02 K 55/04

(21) Anmeldenummer: **80102632.9**

(22) Anmeldetag: **12.05.80**

(54) Anordnung zur Kühlung einer tiefzukühlenden Erregerwicklung im Läufer einer elektrischen Maschine.

(30) Priorität: **22.05.79 DE 2920720**

(43) Veröffentlichungstag der Anmeldung:
**26.11.80 Patentblatt 80/24**

(45) Bekanntmachung des Hinweises auf die Patenterteilung:
**30.11.83 Patentblatt 83/48**

(84) Benannte Vertragsstaaten:
**CH FR GB LI SE**

(56) Entgegenhaltungen:
DE - C - 619 520
DE - C - 924 816
PROCEEDINGS OF THE SEVENTH INTERNATIONAL CRYOGENIC ENGINEERING CONFERENCE, 4.-7.- Juli 1978, London, GB, H. OGATA et al.: "Thermal design of a cryogenic rotor for a 50 MVA superconducting generator", Seiten 276-281
PROCEEDINGS OF THE SEVENTH INTERNATIONAL CRYOGENIC ENGINEERING CONFERENCE, 4.-7. Juli 1978, London, GB R.G. SCURLOCK et al.: "The zero mechanical work thermal pump in the high speed rotating frame and its associated instabilities", Seiten 373-377
CRYOGENICS, Band 17, Nr. 7, Juli 1977, Guildford, GB, A. HOFMANN et al.: "Thermodynamics of a

(73) Patentinhaber: **SIEMENS AKTIENGESELLSCHAFT,**
**Berlin und München Wittelsbacherplatz 2,**
**D-8000 München 2 (DE)**

(72) Erfinder: **Schnapper, Christoph, Dr.,**
**Froebelstrasse 19-21, D-8520 Erlangen (DE)**
Erfinder: **Intichar, Lutz, Dr., Max-Busch-Strasse 12,**
**D-8520 Erlangen (DE)**

(56) Entgegenhaltungen: (Fortsetzung)
**self-pumping cooling cycle for superconducting generator applications", Seiten 429-433**

BUNDESDRUCKEREI BERLIN

# Anordnung zur Kühlung einer tiefzukühlenden Erregerwicklung im Läufer einer elektrischen Maschine

Die Erfindung bezieht sich auf eine Anordnung zur Kühlung einer tiefzukühlenden, insbesondere supraleitenden Erregerwicklung im Läufer einer elektrischen Maschine, insbesondere eines Turbogenerators, mit einer mitrotierenden Mischkammer, die ein Gemisch eines aus dampfförmigen und flüssigen Bestandteilen über eine Zuführungsleitung von außen zugeführten Kühlmittels enthält und an die eine erste Abführungsleitung zur Entnahme eines ersten Kühlmittelstromes an flüssigem Kühlmittel zur Kühlung der Erregerwicklung und an die in Nähe der Läuferachse eine zwischen Bereichen unterschiedlicher Temperatur verlaufende weitere Kühlmittelabführungsleitung angeschlossen sind, wobei die weitere Abführungsleitung als Zentrifugalpumpe zum Abpumpen eines weiteren Kühlmittelstromes an gasförmigem Kühlmittel aus der Mischkammer gestaltet ist und mindestens einen kälteren, im wesentlichen radial bezüglich der Läuferachse verlaufenden, in Achsferne führenden Leitungsteil sowie wärmere, in Achsnähe zurückführende Leitungsteile enthält. Eine derartige Kühlanordnung ist aus »Cryogenics«, Juli 1977, Seiten 429 bis 433 bekannt.

Bei dieser bekannten Kühlanordnung wird von einer Kühleinrichtung ausgegangen, wie sie beispielsweise in der Dissertation von A. Bejan mit dem Titel: »Improved Thermal Design of the Cryogenic Cooling System for a Superconducting Synchronous Generator«, Ph. D.-Thesis, Massachusetts Institute of Technology (USA), Dezember 1974, Seiten 145 bis 167 beschrieben ist. Gemäß dieser Kühleinrichtung wird ein aus einer externen Kühlmittelversorgungseinheit entnommenes Kühlmittel über eine zentrale Kühlmitteleinspeisungsleitung einer mitrotierenden, zentral angeordneten Mischkammer zugeführt. In dieser Mischkammer befindet sich ein Zweiphasengemisch aus flüssigem und gasförmigem Kühlmittel. Im Betriebszustand bei Rotation werden die Phasen dieses Zweiphasengemisches durch die auf sie einwirkenden zentrifugalen Kräfte getrennt, und es lagert sich der Kühlmitteldampf in achsnahen und die Kühlmittelflüssigkeit in achsfernen Bereichen der Mischkammer an. Dabei fließt von der Mischkammer aus ein Kühlmittelstrom an flüssigem Kühlmittel über radial angeordnete Zuführungsleitungen der Erregerwicklung zu. Das Kühlmittel durchströmt dann die Erregerwicklung beispielsweise in bezüglich der Läuferachse paralleler Richtung. Da es sich aufgrund der dort auftretenden Verlustleistungen oder durch Wärmeübertragung von außen erwärmt, nimmt seine Dichte dementsprechend ab. Dadurch entsteht zwischen den radialen Zuführungs- und Rückleitungen eine hydrostatische Druckdifferenz, die zu einer Konvektionsströmung führt und eine Rückleitung des Kühlmittels über eine weitere, radial gerichtete Rückführungsleitung in die Mischkammer bewirkt. Die aufgenommene Wärmemenge führt zu einer Temperaturerhöhung und zu einer teilweisen Verdampfung des Kühlmittels. Die erforderliche Pumpwirkung zur Ausbildung der Strömung des Kühlmittels durch die Erregerwicklung wird somit durch diesen auf Dichteunterschieden beruhenden Thermosyphon-Effekt hervorgerufen.

Das zur Kühlung der Erregerwicklung erforderliche Kühlmittel in der Mischkammer wird zweckmäßig unter Unterdruck gehalten, damit es bei einer verhältnismäßig tiefen Temperatur siedet. Gemäß der genannten Literaturstelle »Cryogenics« kann hierzu die Kühlmittelabführungsleitung als Abpumpvorrichtung ausgebildet sein, wobei die Rotation und eine Erwärmung des Kühlmittels ausgenutzt werden, um den gewünschten Unterdruck in der Mischkammer zu erzeugen. Bei dieser auch als Zentrifugalpumpe bezeichneten Abpumpvorrichtung wird kaltes Kühlmittelgas, welches der Mischkammer in der Nähe der Läuferachse entnommen wird, in einem oder mehreren kalten Radialrohren auf einen größeren Radius geleitet und dabei unter Einfluß der Zentrifugalkraft komprimiert. Danach wird es auf einer im wesentlichen parallel zu der Läuferachse verlaufenden Erwärmungsstrecke angewärmt und anschließend wieder über ein warmes Radialrohr in die Nähe der Achse zurückgeführt, wo es über eine rotierende Helium-Kupplung aus dem rotierenden Teil der Maschine ausgeleitet und einer Kältemaschine zugeführt wird. Auf dem Weg von der achsfernen Erwärmungsstrecke zur Achse wird dabei das Kühlmittel wieder entspannt. Aufgrund der unterschiedlichen Dichte des Kühlmittels ist der Druckunterschied zwischen der achsnächsten und der achsfernsten Stelle auf der kalten Seite größer als auf der warmen Seite. Wenn am Austritt ungefähr Atmosphärendruck vorliegt, erhält man in der Mischkammer dann mit diesem Selbstpump-System der Zentrifugalpumpe den gewünschten Unterdruck.

Es wurde nun in Experimenten festgestellt, daß kurzfristig zwar mit einer solchen Zentrifugalpumpe ein Unterdruck erzeugt werden kann, praktisch aber keine stabilen Unterdruckverhältnisse auf diese Weise über längere Zeit zu erhalten sind. Sobald oder kurz bevor der berechnete Enddruck erreicht wird, steigt nämlich im allgemeinen der Druck in der Mischkammer wieder plötzlich auf Atmosphärendruck an (vgl. z. B. »Proceedings of the Seventh International Cryogenic Enginnering Conference (ICEC 7), London 1978, Seiten 373 bis 377). Der Grund für das Auftreten dieser Instabilitäten ist aber bisher nicht bekannt. In der genannten Veröffentlichung ist jedoch angeregt, einen kälteren Leitungsteil der Zentrifugalpumpe thermisch an das kalte Helium-Bad anzukoppeln, um damit den Druck in dem Bad weiter zu vermindern und so stabilere Pumpverhältnisse zu schaffen.

Aufgabe der vorliegenden Erfindung ist es, den als Zentrifugalpumpe gestalteten Teil der weiteren Kühlmittelabführungsleitung der Anordnung zur Kühlung einer supraleitenden Erregerwicklung der eingangs genannten Art so auszugestalten, daß eine weitere Möglichkeit zur Aufrechterhaltung eines stabilen Unterdruckes in der Mischkammer gegeben ist, wobei die genannten Instabilitäten vermieden werden.

Diese Aufgabe wird erfindungsgemäß mit den im Kennzeichen des Anspruchs 1 angegebenen Maßnahmen gelöst.

Diesen Maßnahmen liegt die Erkenntnis zugrunde, daß das Auftreten der Instabilität der Zentrifugalpumpe auf Wärme zurückzuführen ist, die dem sich in dem kälteren radialen Leitungsteil befindlichen Kühlmittel zugeführt wird. Diese Wärme kann insbesondere über das Kühlmittel selbst von den wärmeren Leitungsteilen her in den kälteren Leitungsteil gelangen, und zwar durch Wärmediffusion oder durch Konvektion, wenn eine Strömung entgegen der gewünschten Strömungsrichtung wie z. B. im Falle von Wirbeln oder in Konvektionsschleifen möglich ist. Gegebenenfalls kann Wärme auch von der Wand des kälteren Leitungsteils oder von den Leitungswänden an der Umlenkstelle an der Peripherie durch Wärmeübergang in das Kühlmittel einströmen, wenn die Wände an diesen Stellen wärmer sind als das Kühlmittel. Gelangt nun Wärme in den kälteren Leitungsteil, so wird dort die Temperatur des Kühlmittels entsprechend erhöht, und die Dichte nimmt ab. Dadurch wird der Förderdruck der Zentrifugalpumpe herabgesetzt, so daß ein instabiles Verhalten auftreten kann. Der Förderdruck reicht dann gegebenenfalls nicht mehr aus, um den Druckunterschied zwischen dem Raum der Mischkammer und dem äußeren Druck aufrechtzuerhalten. Je kleiner dabei die Strömungsgeschwindigkeit des Kühlmittels und je größer der in das kalte Radialrohr gelangende Wärmestrom ist, um so kleiner wird der Förderdruck und um so eher neigt die Pumpe zu Instabilitäten.

Mit der vorgesehenen Dimensionierung des Strömungsquerschnittes gemäß der Erfindung wird vorteilhaft erreicht, daß bei einem vorgegebenen Massendurchsatz die Strömungsgeschwindigkeit in dem kälteren Leitungsteil ausreichend groß wird, um aufgrund von Konvektion entstandene Wirbel an wärmerem Kühlmittel an einem Eindringen in das in dem kälteren Leitungsteil in Gegenrichtung abgeführte Kühlmittel zu hindern. Der Wärmestrom in das in diesem Leitungsteil der Abführungsleitung befindliche Kühlmittel läßt sich somit entsprechend klein halten.

Gemäß einer vorteilhaften Weiterbildung der Kühlanordnung nach der Erfindung kann ein Teilstück der wärmeren Leitungsteile der weiteren Abführungsleitung in Strömungsrichtung des abgeführten Kühlmittels gesehen einen von dem vorbestimmten Strömungsquerschnitt des kälteren Leitungsteils auf den vorbestimmten Strömungsquerschnitt der wärmeren Leitungsteile sich beispielsweise allmählich oder stufenweise erweiternden Strömungsquerschnitt. haben. Der Strömungsquerschnitt dieses Teilstükkes läßt sich so an die mit zunehmender Temperatur zunehmende Zähigkeit und abnehmende Dichte des Kühlmittels anpassen.

Außerdem kann vorteilhaft zur Begrenzung des Wärmestromes in das Kühlmittel in dem kälteren Leitungsteil ein wärmerer Leitungsteil der weiteren Abführungsleitung in der Nähe der Anschlußstelle an den kälteren Leitungsteil als Konvektionsfalle für das abzuführende Kühlmittel gestaltet sein. Mit einer solchen an sich bekannten Konvektionsfalle wird das Eindringen von in dem wärmeren Leitungsteil erwärmten Kühlmittel in den kälteren Leitungsteil noch weiter vermindert.

Weitere vorteilhafte Ausbildungen der Anordnung zur Kühlung nach der Erfindung sind in den übrigen abhängigen Ansprüchen gekennzeichnet.

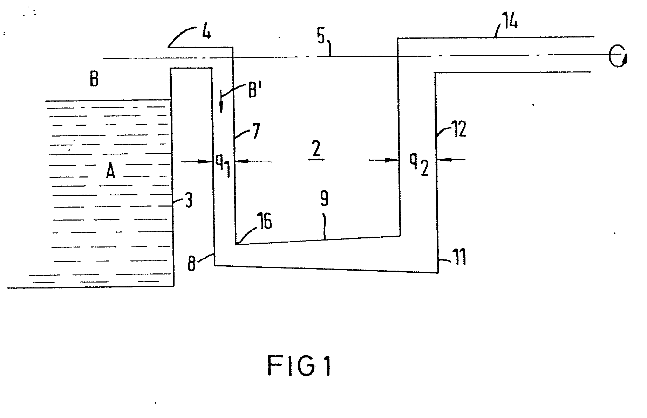

Die Erfindung wird nachstehend anhand der Zeichnung erläutert. Es zeigen die Fig. 1 bis 9 jeweils schematisch als Längsschnitt eine als Zentrifugalpumpe gestaltete Kühlmittelabführungsleitung einer Kühlanordnung gemäß der Erfindung.

Bei der in Fig. 1 dargestellten Zentrifugalpumpe wird von einer Vorrichtung zur Unterdruckerzeugung in einem Kryostatbehälter ausgegangen, wie sie beispielsweise aus der Literaturstelle »Cryogenics«, Juli 1977, Seiten 429 bis 433 zu entnehmen ist. Mit dieser Pumpe, die Teil einer allgemein mit 2 bezeichneten Kühlmittelabführungsleitung ist, soll in einer in der Figur nur angedeuteten Mischkammer 3 ein Unterdruck ausgebildet werden. Die Mischkammer befindet sich zentral in einem nicht näher ausgeführten Läufer einer elektrischen Maschine, insbesondere eines Turbogenerators. Sie enthält im Betriebszustand der Maschine ein Zweiphasengemisch aus flüssigem und gasförmigem Kühlmittel A bzw. B. In der Figur wurde auf die Darstellung verzichtet, daß das Kühlmittel einer externen Kühlmittelversorgungseinheit entnommen und über eine Kühlmitteleinspeisungsleitung, die an einem Anschlußkopf des Läufers eine Kühlmittel-Kupplung enthält, der Mischkammer zugeführt wird. An der Kühlmittel-Kupplung, die beispielsweise aus der Literaturstelle »Siemens Forschungs- und Entwicklungsberichte«, Band 5, 1976, Nr. 1, Seite 13 bekannt ist, wird das Kühlmittel von feststehenden auf rotierende Teile der Maschine übergeleitet. Im Betriebszustand bei Rotation des Läufers sind die Phasen des Zweiphasengemisches in der Mischkammer 3 unter Einwirkung der an ihnen angreifenden Zentrifugalkräfte getrennt. Das in der Mischkammer vorhandene flüssige Kühlmittel dient zur Kühlung einer in der Figur nicht ausgeführten, tiefzukühlenden, insbesondere supraleitenden Erregerwicklung im Läufer. Als Kühlmittel für Supraleiter kommt im allgemeinen nur Helium, für andere tiefzukühlende Leiter ein entsprechendes kryogenes Medium wie z. B. Wasserstoff oder Stickstoff in Frage.

Mit Hilfe der Zentrifugalpumpe wird aus der Mischkammer 3 gasförmiges Kühlmittel B' an einer zentralen Entnahmestelle 4 in Nähe der Rotationsachse 5 abgesaugt. Der die Zentrifugalpumpe bildende Teil der Abführungsleitung 2 ist gemäß dem Längsschnitt der Figur U-förmig gestaltet. Er enthält mindestens einen bezüglich der Rotationsachse 5 radial verlaufenden, z. B. rohrförmigen Leitungsteil 7, mit dem der Kühlmitteldampf B' von der Achsnähe der Entnahmestelle 4 auf einen großen Radius bezüglich der Rotationsachse 5 gebracht wird. Ein achsfernes Endstück 8 dieses Leitungsteils 7 mündet in ein beispielsweise rohrförmiges Verbindungsstück 9, das sich parallel zur Rotationsachse 5 erstreckt. An seinem dem Leitungsteil 7 abgewandten Ende ist das Enstück 11 eines weiteren rohrförmigen Leitungsteiles 12 angeschlossen, der sich in radialer Richtung bezüglich der Rotationsachse 5 erstreckt und in Achsnähe in eine zentrale Kühlmittelaustrittsleitung 14 mündet. In dieser Austrittsleitung ist ebenfalls eine in der Figur nicht dargestellte rotierende Kühlmittel-Kupplung vorgesehen, mit der an einem Anschlußkopf des Läufers das Kühlmittelgas B' aus der Maschine ausgeleitet und dann beispielsweise einer externen Kühlmittelversorgungseinheit zugeführt wird.

Da sich der Anschlußkopf mit der Kühlmittelaustrittsleitung 14 im allgemeinen auf höherer Temperatur, beispielsweise aus Raumtemperatur, und die Entnahmestelle 4 für den Kühlmitteldampf B' aus der Mischkammer 3 auf Kryotemperatur befinden, muß der über die Zentrifugalpumpe abgeleitete Kühlmitteldampf B' ein entsprechendes Temperaturgefälle durchlaufen. Der auf der Seite der Mischkammer 3 liegende radiale Leitungsteil 7 der Zentrifugalpumpe wird deshalb auch als kalter Leitungsteil und der auf der Seite des Anschlußkopfes liegende radiale Leitungsteil 12 als warmer Leitungsteil bezeichnet. Das Verbindungsstück 9 zwischen diesen beiden Leitungsteilen stellt somit eine Erwärmungsstrecke für das Kühlmittel B' dar. Diese Erwärmungsstrecke kann zweckmäßig mit Teilen des Läuferkörpers thermisch verbunden sein, um in diesen entsprechende Temperaturverhältnisse einzustellen.

Das den Raum der Mischkammer 3 an der Entnahmestelle 4 verlassende, kalte Kühlmittelgas B' wird in dem kalten radialen Leitungsteil 7 auf einen größeren Radius geleitet und dabei unter Einfluß der Zentrifugalkraft komprimiert. Danach wird das Kühlmittel in dem Verbindungsstück 9 angewärmt und anschließend wieder in die Nähe der Achse 5 über das wärmere radiale Leitungsteil 12 zurückgeführt, wo es dann den rotierenden Teil der Maschine über die Kühlmittel-Kupplung verläßt. Auf dem Weg von der Peripherie zur Achse wird dabei das Kühlmittel wieder entspannt.

Aufgrund der unterschiedlichen Dichte des Kühlmittels ist der Druckunterschied zwischen der achsnächsten und achsfernsten Stelle auf der kalten Seite größer als auf der warmen Seite. Wenn am Austritt ungefähr Atmosphärendruck vorliegt, erhält man so an der Entnahmestelle 4 der Mischkammer 3 einen Unterdruck. Bei der Zentrifugalpumpe wird somit der bekannte Selbstpumpeffekt ausgenutzt.

Gemäß der Erfindung wird der in der Figur mit $q_1$ bezeichnete größte Strömungsquerschnitt des kälteren Leitungsteils 7 höchstens halb so groß wie der größte mit $q_2$ bezeichnete Strömungsquerschnitt der an den kälteren Leitungsteil 7 angeschlossenen und in Achsnähe zurückführenden Teile 9, 12 der Kühlmittelabführungsleitung 2 gewählt. Vorzugsweise ist der größte Strömungsquerschnitt $q_1$ des kälteren Leitungsteils 7 höchstens ein Drittel des größten Strömungsquerschnittes $q_2$ der wärmeren Leitungsteile 9, 12. Mit dieser Dimensionierung wird nämlich erreicht, daß die Strömungsgeschwindigkeit in dem kälteren Leitungsteil 7 erhöht wird und damit Konvektionswirbel am Eindringen in diesen Leitungsteil gehindert werden.

Andererseits muß der Querschnitt ausreichend groß sein, damit der Druckabfall infolge Strömungsreibung in der gesamten Kühlmittelabführungsleitung 2 klein ist gegenüber dem Förderdruck der Zentrifugalpumpe. Bei gleichen Strömungsquerschnitten $q_1$ und $q_2$ würde der wesentliche Druckabfall wegen der größeren dynamischen Zähigkeit und der kleineren Dichte des wärmeren Kühlmittels in den wärmeren Leitungsteilen auftreten. Man kann deshalb $q_1$ vorteilhaft wesentlich kleiner wählen als $q_2$, ohne daß der gesamte Druckabfall in der Abführungsleitung wesentlich ansteigt.

Vorteilhaft kann der an den kälteren Leitungsteil angeschlossene wärmere Leitungsteil einen allmählich oder stufenweise zunehmenden Strömungsquerschnitt haben. Hiermit kann eine Anpassung an die mit zunehmender Temperatur des Kühlmittels B' zunehmende Zähigkeit und abnehmende Dichte des Kühlmittels erreicht werden. Im Ausführungsbeispiel der Figur ist angenommen, daß das achsparallel verlaufende und eine Erwärmungsstrecke darstellende Teilstück 9 des wärmeren Leitungsteils sich konisch erweiternd vom Strömungsquerschnitt $q_1$ des kälteren Leitungsteils 7 auf den Strömungsquerschnitt $q_2$ des wärmeren Leitungsteils 12 ausgebildet ist.

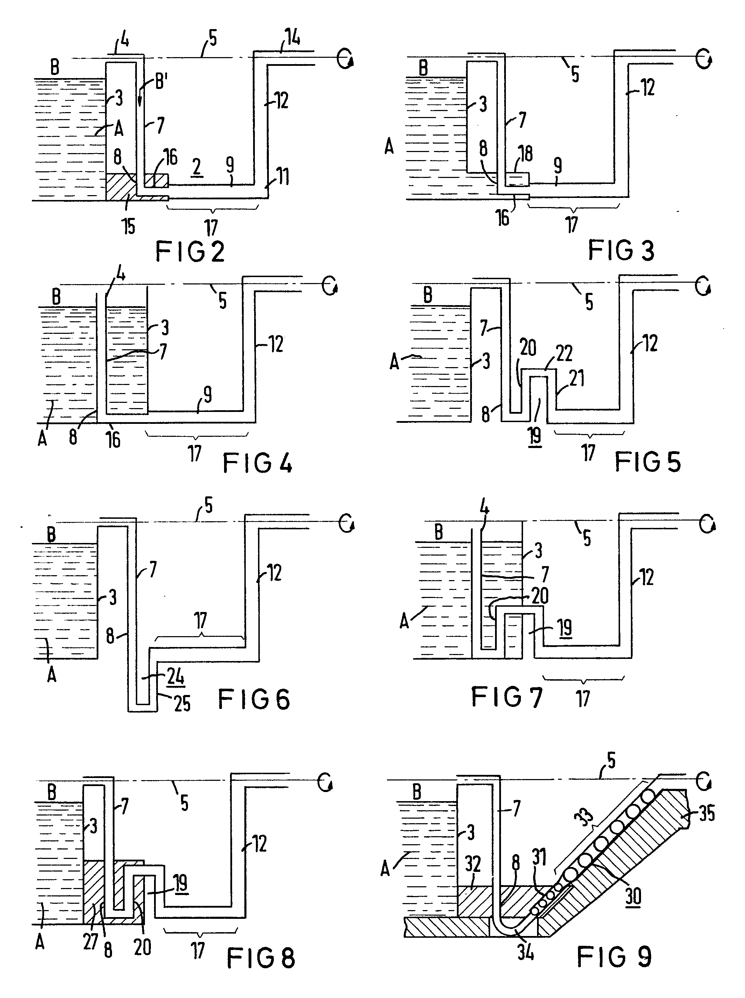

Ferner wird vorteilhaft bei der Kühlanordnung nach der Erfindung der von außen in den kalten radialen Leitungsteil 7 eindringende Wärmestrom durch eine thermische Ankopplung dieses Leitungsteils an noch kältere Stellen des Läufers begrenzt. Diese Maßnahmen sind Gegenstand der europäischen Patentanmeldung 80 102 631.1 (Veröffentlichungsnummer 0 019 258) mit gleichem Anmelde- und Prioritätstag. Gemäß dem in Figur 2 als Längsschnitt dargestellten Ausführungsbeispiel einer Kühlanordnung sind dementsprechend das achsferne Endstück 8 des kälteren radialen Leitungsteils 7 und die Einmündung 16 in das Verbindungsstück 9 über einen Körper 15 aus gut wärmeleitendem Material wie beispielsweise Kupfer oder Aluminium thermisch leitend mit dem flüssigen Kühlmittel A in der Mischkammer verbunden. Dieses Kühlmittel ist nämlich im allgemeinen kälter als der komprimierte Kühlmitteldampf in dem Endstück 8. Auf diese Weise kann dem Kühlmitteldampf an dieser Stelle Wärme entzogen und so seine Temperatur herabgesetzt werden. Dann befindet sich das kältere, dichtere Kühlmittel auf größerem radialen Abstand bzgl. der Achse 5, so daß keine Auftriebskräfte wirken und sich deshalb auch keine Wirbel bilden. Die Erwärmungsstrecke in dem Verbindungsstück 9, in der eine Temperaturerhöhung des Kühlmitteldampfes B' in der Abführungsleitung 2 erfolgt, ist in der Figur mit 17 bezeichnet. Ihr Strömungsquerschnitt ist ebenso wie der Strömungsquerschnitt des sich anschließenden wärmeren Leitungsteils 12 gemäß der Erfindung mindestens doppelt so groß wie der Strömungsquerschnitt des kälteren Leitungsteils 7. Die übrigen Teile der Kühlanordnung entsprechen den in F i g. 1 dargestellten Teilen und sind mit den entsprechenden Bezugszeichen gekennzeichnet.

Die in Figur 3 als Längsschnitt dargestellte Zentrifugalpumpe entspricht im wesentlichen der Ausführungsform nach Fig. 2. Diese Zentrifugalpumpe unterscheidet sich lediglich von der Ausführungsform nach Fig. 2 dadurch, daß das Endstück 8 ihres kälteren radialen Leitungsteils 7 und die Einmündung 16 des Verbindungsstücks 9 nicht indirekt über einen thermisch gut leitenden Körper mit dem flüssigen Kühlmittel A in der Mischkammer 3 thermisch verbunden sind, sondern daß das Endstück 8 und die Einmündungsstelle 16 direkt von dem flüssigen Kühlmittel umspült sind, indem sie sich in einem entsprechenden, mit der Mischkammer verbundenen Kühlmittelkanal 18 befinden. Es wird so ein direkter Wärmeaustausch zwischen diesen Stellen der Zentrifugalpumpe und dem kälteren Kühlmittel A bewirkt. Die Erwärmungsstrecke 17 für das Kühlmittelgas ist dann der außerhalb des Kühlmittelbades verlaufende Teil des Verbindungsstücks 9.

Gemäß Fig. 4 kann eine thermische Ankopplung des kälteren Leitungsteils 7 und der Einmündungsstelle 16 auch dadurch erhalten werden, daß der gesamte Leitungsteil 7 und die Einmündungsstelle 16 des Verbindungsstücks 9 in der Mischkammer 3 angeordnet sind. Das achsnahe, als Entnahmestelle 4 gestaltete Ende des Leitungsteils 7 befindet sich dabei in dem mit gasförmigem Kühlmittel B gefüllten Teilraum der Mischkammer 3.

Bei der Kühlanordnung nach der Erfindung kann eine Konvektion von erwärmtem Kühlmittel in den kälteren radialen Leitungsteil zusätzlich noch durch eine Konvektionsfalle weiter vermindert werden. Wie in Fig. 5 dargestellt, ist dementsprechend das Verbindungsstück 9 an der Einmündungsstelle des kälteren radialen Leitungsteils 7, 8 als U-förmiger Syphon 19 gestaltet. Dieser Syphon liegt auf einem vergleichsweise kleineren Radius als die Erwärmungsstrecke 17 und besteht aus zwei parallelen, radial verlaufenden Syphonrohren 20 und 21, die über ein achsparallel verlaufendes Zwischenrohr 22 miteinander verbunden sind. Das in der Erwärmungsstrecke 17 angewärmte Kühlmittelgas erfährt zwar durch die Zentrifugalkraft einen Auftrieb zur Rotationsachse hin und kann so gegebenenfalls in das Syphonrohr 21 eindringen; es wird jedoch durch die Auftriebskraft daran gehindert, in das Syphonrohr 20 zu strömen. Mit diesem Syphon wird somit eine Konvektion des Kühlmittels von der Erwärmungsstrecke 17 zu dem kälteren radialen Leitungsteil 7, 8 verhindert. Der Syphon stellt deshalb eine Konvektionsfalle für das in der Erwärmungsstrecke 17 erwärmte Kühlmittelgas dar.

Im Gegensatz zu der in F i g. 5 dargestellten Zentrifugalpumpe mit einem Syphon auf kleinerem Radius als die Erwärmungsstrecke ist die in F i g. 6 gezeigte Zentrifugalpumpe mit einem Syphon 24 ausgestattet, der sich auf einem größeren Radius als die Erwärmungsstrecke 17 befindet. Bei dieser Ausführungsform verhindert die Auftriebskraft, daß das in der Erwärmungsstrecke 17 angewärmte Kühlmittel in das mit ihr verbundene, radial verlaufende Syphonrohr 25 eindringen kann.

Bei der in Fig. 8 angedeuteten Zentrifugalpumpe ist sowohl ein Syphon 19 entsprechend der Ausführungsform nach Fig. 5 als auch eine thermische Ankopplung entsprechend der Ausführungsform nach Fig. 2 vorgesehen. Die thermische Ankopplung des achsfernen Endstücks 8 des Leitungsteils 7 sowie des einen, dazu benachbarten Schenkels 20 des U-förmigen Syphons 19 erfolgt über einen Körper 27 aus thermisch gut leitendem Material an das flüssige Kühlmittel A in dem Bad der Mischkammer 3.

Gegenüber dem in Fig. 8 gezeigten Ausführungsbeispiel einer Zentrifugalpumpe wird bei der in Fig. 7 dargestellten Pumpe, die ebenfalls einen Syphon 19 enthält, die thermische Ankopplung durch einen direkten Wärmeaustausch mit kälterem Kühlmittel entsprechend dem Ausführungsbeispiel nach Fig. 4 dadurch erreicht, daß der gesamte radiale Leitungsteil 7 und der benachbarte Schenkel 20 des Syphons 19 im Bad des flüssigen Kühlmittels A in der Mischkammer 3 angeordnet sind.

Bei den Ausführungsbeispielen von Zentrifugalpumpen nach den Fig. 1 bis 8 wurde davon ausgegangen, daß die jeweilige Erwärmungsstrecke zwischen kälteren und wärmeren Leitungsteilen der Kühlmittelabführungsleitung stets parallel bezüglich der Rotationsachse verläuft. Für die Erfindung ist jedoch diese Lage der Erwärmungsstrecke unwesentlich. Gemäß dem Ausführungsbeispiel einer Zentrifugalpumpe nach Fig. 9 kann deshalb die Erwärmungsstrecke zusammen mit einem an sie angeschlossenen wärmeren Leitungsteil einen gemeinsamen Leitungsteil 30 bilden, der bezüglich der Rotationsachse 5 schräg verläuft. Das achsferne Endstück 8 des kalten, radial verlaufenden Leitungsteils 7 sowie ein achsfernes Teilstück 31 des schräg verlaufenden Leitungsteils 30 sind über einen Körper 32 aus gut wärmeleitendem Material an das kältere, flüssige Kühlmittel A in der Mischkammer 3 thermisch angekoppelt. Die Erwärmungsstrecke 33 für das gasförmige Kühlmittel ist somit der sich zwischen dem Körper 31 und der Rotationsachse 5 erstreckende Teil des Leitungsteils 30. Das Endstück 8 und das Teilstück 31 sind über ein gekrümmtes Rohrstück 34 miteinander verbunden. Dieses sich auf größerem Radius als die Erwärmungsstrecke 33 des Leitungsteils 30 befindliche Rohrstück stellt ebenfalls einen Syphon dar, der von seiner Funktionsweise her im wesentlichen dem Syphon 24 nach Fig. 6 entspricht.

Für die Erfindung ist es ferner ohne Bedeutung, ob die Erwärmungsstrecke der Zentrifugalpumpe auf dem Umfang eines rotierenden Zylinders oder eines rotierenden Kegels als Spirale oder Schlange ausgebildet ist. Im Ausführungsbeispiel nach Fig. 9 ist eine Spiralform der Erwärmungsstrecke 33 angenommen, wobei diese auf der kegelmantelförmigen Innenseite eines in der Figur nur teilweise ausgeführten, drehmomentübertragenden Kegelmantels 35 angeordnet ist.

Bei den Ausführungsbeispielen nach den Fig. 1 bis 9 wurde angenommen, daß die Kühlmittelabführungsleitung 2 nur einen einzigen Führungskanal für das Kühlmittel aufweist. Gegebenenfalls können aber auch mehrere parallelgeschaltete Kanäle vorgesehen werden. Hiermit lassen sich zu große Druckabfälle in der Abführungsleitung vermeiden. Zweckmäßig werden dementsprechend der kältere Leitungsteil 7 und mindestens ein wesentliches Teilstück der daran angeschlossenen Erwärmungsstrecke 17 als parallelgeschaltete Kanäle ausgebildet. Eine Wiedervereinigung der durch diese Kanäle geführten Kühlmittelströme erfolgt dann frühestens nach diesem Teilstück der Erwärmungsstrecke und insbesondere erst nach Durchlaufen der wärmeren radialen Leitungsteile in der Nähe der Rotationsachse 5.

In den Ausführungsbeispielen einer Kühlanordnung nach der Erfindung gemäß den Figuren 3, 4 und 7 wurde ferner eine direkte Umspülung zumindest von Teilen des kälteren Leitungsteils der Kühlmittelabführungsleitungen angenommen. Eine entsprechende thermische Ankopplung dieser Teile ist jedoch ebenso gut indirekt über mindestens einen Wärmetauscher möglich.

## Patentansprüche

1. Anordnung zur Kühlung einer tiefzukühlenden, insbesondere supraleitenden Erregerwicklung im Läufer einer elektrischen Maschine, insbesondere eines Turbogenerators, mit einer mitrotierenden Mischkammer (3), die ein Gemisch eines aus dampfförmigen und flüssigen Bestandteilen (B bzw. A) eines über eine Zuführungsleitung von außen zugeführten Kühlmittels enthält und an die eine erste Abführungsleitung zur Entnahme eines ersten Kühlmittelstromes an flüssigem Kühlmittel zur Kühlung der Erregerwicklung und an die in Nähe der Läuferachse (5) eine zwischen Bereichen unterschiedlicher Temperatur verlaufende weitere Kühlmittelabführungsleitung (2) angeschlossen sind, wobei die weitere Abführungsleitung (3) als Zentrifugalpumpe zum Abpumpen eines weiteren Kühlmittelstromes (B') an gasförmigem Kühlmittel (B) aus der Mischkammer (3) gestaltet ist und mindestens einen kälteren, im wesentlichen radial bezüglich der Läuferachse verlaufenden, in Achsferne führenden Leitungsteil (7) sowie wärmere, in Achsnähe zurückführende Leitungsteile (9, 12) enthält, dadurch gekennzeichnet, daß der größte Strömungsquerschnitt ($q_1$) des kälteren Leitungsteils (7) der weiteren Abführungsleitung (2) höchstens halb so groß ist wie der größte Strömungsquerschnitt ($q_2$) der wärmeren, in Achsnähe zurückführenden Leitungsteile (9, 12).

2. Anordnung zur Kühlung nach Anspruch 1, gekennzeichnet durch ein Verhältnis des größten Strömungsquerschnittes ($q_1$) des kälteren Leitungsteils (7) zu dem größten Strömungsquerschnitt ($q_2$) der wärmeren Leitungsteile (9, 12) von höchstens 1 : 3.

3. Anordnung zur Kühlung nach Anspruch 1 oder 2, dadurch gekennzeichnet, daß ein Teilstück (17) der wärmeren Leitungsteile (9, 12) der weiteren Abführungsleitung (2) in Strömungsrichtung des abgeführten Kühlmittels (B') gesehen einen von dem vorbestimmten Strömungsquerschnitt ($q_1$) des kälteren Leitungsteils (7) auf den vorbestimmten Strömungsquerschnitt ($q_2$) der wärmeren Leitungsteile sich erweiternden Strömungsquerschnitt hat (Fig. 1).

4. Anordnung zur Kühlung nach einem der Ansprüche 1 bis 3, dadurch gekennzeichnet, daß ein wärmerer Leitungsteil der weiteren Abführungsleitung (2) in der Nähe der Anschlußstelle an den kälteren Leitungsteil (7) als Konvektionsfalle (19; 24) für das abzuführende Kühlmittel (B') gestaltet ist.

5. Anordnung zur Kühlung nach Anspruch 4, dadurch gekennzeichnet, daß die Konvektionsfalle (19; 24) ein U-förmig gestalteter Leitungsteil ist.

6. Anordnung zur Kühlung nach Anspruch 4 oder 5, dadurch gekennzeichnet, daß die Konvektionsfalle (24) auf größerem Radius als die wärmeren Leitungsteile (17, 12) der weiteren Abführungsleitung (2) angeordnet ist (Fig. 6).

7. Anordnung zur Kühlung nach einem der Ansprüche 1 bis 6, dadurch gekennzeichnet, daß die wärmeren Leitungsteile (30) der weiteren Abführungsleitung bezüglich der Läuferachse (5) schräg angeordnet sind (Fig. 9).

8. Anordnung zur Kühlung nach einem der Ansprüche 1 bis 6, dadurch gekennzeichnet, daß die wärmeren Leitungsteile der weiteren Abführungsleitung (2) mindestens einen, im wesentlichen parallel zu der Läuferachse (5) verlaufenden, achsfernen Leitungsteil (9) mit einer Erwärmungsstrecke (17) für das abgeführte Kühlmittel (B') sowie einen weiteren, im wesentlichen radial bezüglich der Läuferachse (5) verlaufenden Leitungsteils (12) enthalten.

9. Anordnung zur Kühlung nach einem der Ansprüche 1 bis 8, dadurch gekennzeichnet, daß der kältere Leitungsteil und zumindest ein daran angeschlossenes Teilstück der wärmeren Leitungsteile der Kühlmittelabführungsleitung als parallelgeschaltete Kühlmittelführungskanäle ausgebildet sind.

## Claims

1. An arrangement for cooling an excitation winding, which is to be cooled at a low temperature, in particular a superconducting excitation winding, in the rotor of an electrical machine, in particular a turbo-generator, said arrangement having a mixing chamber (3) rotating therewith, which contains a mixture of vaporous and liquid components (B and A respectively) of a coolant which is supplied from outside through a supply line, and to which mixing chamber is connected a first discharge line for the withdrowal of a first coolant stream of liquid coolant in order to cool the excitation winding, and a further coolant discharge line (2), which runs between regions of different temperature, in the vicinity of the rotor axis (5), the further discharge line (2) being in the form of a centrifugal pump serving to pump off a further coolant current (B') of gaseous coolant (B) from the mixing chamber (3), and including both at least one colder section of line (7), which runs so as to be essentially radial relative to the rotor axis and leads away from the axis, and warmer sections of line (9, 12) leading back towards the axis, characterised in that the largest flow cross-section ($q_1$) of the colder line section (7) of the further discharge line (2) is at most half as large as the largest flow cross-section ($q_2$) of the warmer line sections (9, 12) leading back towards the axis.

2. A cooling arrangement as claimed in Claim 1, characterised by a ratio of the largest flow cross-section ($q_1$) of the colder line section (7) to the largest flow cross-section ($q_2$) of the warmer line section (9, 12) of at most 1 : 3.

3. A cooling arrangement as claimed in Claim 1 or Claim 2, characterised in that, viewed in the direction of flow of the withdrawn coolant (B'), a part (17) of the warmer line sections (9, 12) of the further discharge line (2) has a flow cross-section widening from the predetermined flow cross-section ($q_1$) of the colder line section (7) to the predetermined flow cross-section ($q_2$) of the warmer line sections, (Figure 1).

4. A cooling arrangement as claimed in one of Claims 1 to 3, characterised in that a warmer line section of the further discharge line (2) in the vicinity of the connection point to the colder line section (7), is in the form of a convection trap (19;

24) for the coolant (B') to be discharged.

5. A cooling arrangement as claimed in Claim 4, characterised in that the convection trap (19; 24) is a U-shaped line section.

6. A cooling arrangement as claimed in Claim 4 or Claim 5, characterised in that the convection trap (24) is arranged at a greater radius than the warmer line sections (7, 12) of the further discharge line (2) (Figure 6).

7. A cooling arrangement as claimed in one of Claims 1 to 6, characterised in that the warmer line sections (30) of the further discharge line are transversely arranged relative to the rotor axis (5), (Figure 9).

8. A cooling arrangement as claimed in one of Claims 1 to 6, characterised in that the warmer line sections of the further discharge line (2) include at least one line section (9) which is spaced from and essentially runs parallel to the rotor axis (5), and has a heating length (17) for the discharged coolant (B'), and a further line section (12) which runs so as to be essentially radially disposed relative to the rotor axis (5).

9. A cooling arrangement as claimed in one of Claims 1 to 8, characterised in that the colder line section and at least one part of the warmer line sections of the coolant discharge line connected to the colder line section, are in the form of parallel channels carrying coolant.

## Revendications

1. Installation de refroidissement d'un enroulement d'excitation cryogénique, notamment supraconducteur, dans le rotor d'une machine électrique, notamment d'un turbo-alternateur, comprenant une chambre de mélange (3), qui tourne avec le rotor et qui contient un mélange d'un agent réfrigérant, formé de constituants sous forme de vapeurs et de liquides (B et A respectivement) amenés de l'extérieur par un conduit d'amenée, et à laquelle sont raccordés un premier conduit d'évacuation pour prélever un premier courant d'agent réfrigérant sous forme d'un liquide réfrigérant en vue de refroidir l'enroulement d'excitation et, au voisinage de l'axe du rotor (5), un autre conduit d'évacuation de l'agent réfrigérant (2) s'étendant entre des régions de température différente, l'autre conduit d'évacuation (2) étant agencé en pompe centrifuge pour enlever par pompage de la chambre de mélange (3) un autre courant (B') d'agent réfrigérant sous la forme d'un agent réfrigérant gazeux (B), et comprenant au moins une partie de conduit (7) plus froide, s'étendant sensiblement radialement par rapport à l'axe du rotor et dirigé en s'éloignant de cet axe, ainsi que des parties de conduits (9, 12) revenant au voisinage de l'axe, caractérisée en ce que la section droite d'écoulement ($q_1$) la plus grande de la partie de conduit (7) plus froide de l'autre conduit d'évacuation (2) est égale au plus à la moitié de la plus grande section droite d'écoulement ($q_2$) des parties de conduits (9, 12) plus chaudes revenant au voisinage de l'axe.

2. Installation de refroidissement selon la revendication 1, caractérisée par un rapport de la plus grande section droite d'écoulement ($q_1$) de la partie de conduit (7) plus froide à la plus grande section droite d'écoulement ($q_2$) des parties de conduits (9, 12) plus chaudes de 1 : 3 au plus.

3. Installation de refroidissement selon la revendication 1 ou 2, caractérisée en ce qu'un tronçon (17) des parties de conduits (9, 12) plus chaudes au niveau de l'autre conduit d'évacuation (2) a une section droite d'écoulement qui, considérée suivant la direction d'écoulement de l'agent réfrigérant évacué (B'), s'élargit de la section droite d'écoulement ($q_1$) prescrite de la partie de conduit (7) plus froide à la section droite d'écoulement ($q_2$) prescrite des parties de conduits plus chaudes (figure 1).

4. Installation de refroidissement suivant l'une des revendications 1 à 3, caractérisée en ce qu'une partie de conduit plus chaude de l'autre conduit d'évacuation (2) est agencée, au voisinage de l'endroit de raccordement à la partie de conduit (7) plus froide, en piège à convection (19; 24) pour l'agent réfrigérant (B') à évacuer.

5. Installation de refroidissement suivant la revendication 4, caractérisée en ce que le piège à convection (19; 24) est une partie de conduit conformée en U.

6. Installation de refroidissement suivant la revendication 4 ou 5, caractérisée en ce que le piège à convection (24) est disposé sur un plus grand rayon que les parties de conduit (17, 12) plus chaudes de l'autre conduit d'évacuation (2) (figure 6).

7. Installation de refroidissement suivant l'une des revendications 1 à 6, caractérisée en ce que les parties de conduits (30) plus chaudes de l'autre conduit d'évacuation sont disposées de manière inclinée par rapport à l'axe du rotor (5) (figure 9).

8. Installation de refroidissment suivant l'une des revendications 1 à 6, caractérisée en ce que les parties de conduits plus chaudes de l'autre conduit d'évacuation (2) comprennent au moins une partie de conduit (9) s'étendant sensiblement parallèlement à l'axe du rotor (5), éloignée de l'axe et ayant une zone de chauffage (17) de l'agent réfrigérant évacué (B'), ainsi qu'une autre partie de conduit (12) s'étendant sensiblement radialement par rapport à l'axe du rotor (5).

9. Installation de refroidissement suivant l'une des revendications 1 à 8, caractérisée en ce que la partie de conduit plus froideet au moins un tronçon s'y raccordant des parties de conduits plus chaudes du conduit d'évacuation de l'agent réfrigérant sont agencées en canaux de passage de l'agent réfrigérant montés en parallèle.

FIG 1

FIG 2

FIG 3

FIG 4

FIG 5

FIG 6

FIG 7

FIG 8

FIG 9